# EUROPÄISCHE PATENTSCHRIFT

(11) **EP 1 073 211 B1**
(45) Veröffentlichungstag und Bekanntmachung des Hinweises auf die Patenterteilung: **21.05.2008**
(21) Anmeldenummer: 00114315.5
(22) Anmeldetag: 04.07.2000
(51) Int. Cl.: H04B 3/54

(54) **Verfahren und Vorrichtung zur Kommunikation über elektrische Energieversorgungsleitungen**
Method and apparatus for communicating over power line
Méthode et appareil pour la communication dans ligne d'alimentation

(30) Priorität: 12.07.1999 DE 19932435; 13.10.1999 DE 19949390
(43) Veröffentlichungstag der Anmeldung: 31.01.2001
(73) Patentinhaber: Integer Software GmbH, 83024 Rosenheim (DE)
(72) Erfinder: Dalichau, Harald, Prof. Dr.-Ing. Dr-Ing.habil, 81739 München-Waldperlach (DE); Raimund Schweiger, 85716 Unterschleissheim (DE)
(74) Vertreter: Flach, Dieter Rolf Paul

(56) Entgegenhaltungen:
- EP-A- 0 756 389
- EP-A- 0 913 955
- WO-A-00/36776
- US-A- 4 924 456

## Beschreibung

Die Erfindung betrifft ein Verfahren und eine Vorrichtung zur Kommunikation über die Leitungen (Powerline) des elektrischen Energieversorgungsnetzes.

Der Bedarf an Möglichkeiten zur elektronischen Kommunikation, das heißt zur elektronischen Übertragung verschiedenster Informationen und Daten nimmt ständig zu. Daher besteht ein wachsender Bedarf an geeigneten Übertragungsmedien und -kanälen.

Eines dieser Medien ist das elektrische Energieversorgungsnetz, das nahezu weltweit installiert ist und für jeden modernen Menschen einfache Zugangsmöglichkeiten bietet. Für den Niederspannungsteil (in Mitteleuropa: 230V, 50 Hz; in anderen Ländern z.B. 120V, 60Hz) dieses Netzes sieht die europäische CENELEC-Norm EN 50065 im Bereich bis 148,5 kHz verschiedene Frequenzbänder zur Informationsübertragung vor. Ein konventionelles System zur Datenübertragung innerhalb dieser Norm ist in Application Note AN 655 der Firma SGS-Thompson, http://www.st.com angegeben. Dieses System enthält ein Modem zur Erzeugung und zum Empfang der zu übertragenden Daten mittels Frequenzmodulation bei festen Frequenzen von etwa 131 und 133 kHz.

Zur schnellen Datenübertragung, beispielsweise für hochauflösende Videosignale in Echtzeit und für den schnellen Internet-Zugang sind Datenübertragungsraten im Bereich von 1 Mbit/s und mehr erwünscht. Auf dem elektrischen Energieversorgungsnetz, in dem hohe Störpegel und große Durchgangsdämpfungen auftreten, sind solche Übertragungsraten im Rahmen der genannten Norm im Frequenzbereich bis etwa 150 kHz praktisch nicht mit der erforderlichen Zuverlässigkeit erreichbar.

Die Erfinder haben daher Frequenzbereiche ab 150 kHz, bis etwa 30 MHz oder mehr betrachtet. Für diese Frequenzbereiche gibt es derzeit allgemein keine Normen oder Vorschriften, die zulässige Sendepegel speziell für die Kommunikation auf dem Energieversorgungsnetz festlegen. Mit einer weiten Verbreitung von Vorrichtungen, die diesen Frequenzbereich nutzen, wächst jedoch die Gefahr, dass vorhandene Funkdienste, die mit Genehmigung im gleichen Frequenzbereich arbeiten, gestört werden.

So ist der Frequenzbereich von 0,15 bis 30 MHz zur Zeit von einer grossen Zahl an Funkdiensten belegt, denen jeweils ein kleiner Teil des Frequenzbereichs zugeteilt ist. Der Betrieb von elektronischen Geräten, die genehmigte Funkdienste stören, kann im allgemeinen von den zuständigen Regulierungsbehörden für die Telekommunikation verboten werden. Da bestehende Frequenzzuteilungen nur mit sehr langer Kündigungsfrist geändert werden können, bestehen Überlegungen, Frequenzbereiche solcher Funkdienste, die nach Kenntnis der Regulierungsbehörde nicht mehr oder nur sehr selten genutzt werden, für die Kommunikation über das Energieversorgungsnetz zunächst "bedingt" freizugeben. Dies heißt, dass die Freigabe zurückgenommen werden kann, sobald ein Funkdienst im entsprechenden Frequenzbereich gestört ist.

Es besteht also das Problem, dass eine schnelle elektronische Kommunikation über das Energieversorgungsnetz technisch und wirtschaftlich machbar ist, ein Anbieter oder Betreiber entsprechender Kommunikationsdienstleistungen oder -systeme jedoch das Risiko eingeht, dass ihm seine Dienste oder Systeme durch die zuständige Regulierungsbehörde untersagt werden können, weil sie genehmigte Funkdienste stören. Bei Massenanwendungen könnten daher kostspielige Rückrufaktionen auf die Betreiber und Anbieter zukommen.

Eine gattungsbildende Vorrichtung sowie ein zugehöriges Verfahren ist aus der EP-A-0 756 389 bekannt geworden. Diese Druckschrift offenbart in Figur 1 eine Vorrichtung, die aus digitalen Informationen TxD ein frequenzmoduliertes Signal Tx erzeugt. Dieses wird nochmals auf zwei hochfrequente Trägerfrequenzen F'1 und F'2 moduliert, um ein Signal TAI zu erhalten, das über ein Energieversorgungsnetz übertragen wird. Dieses Signal enthält also zwei identische Datenströme auf den beiden Hochfrequenz-Trägern. Das Empfangsteil der Vorrichtung ist dabei in der Lage, den weniger bedämpften der beiden Träger zu erkennen und zur Demodulation zu verwenden.

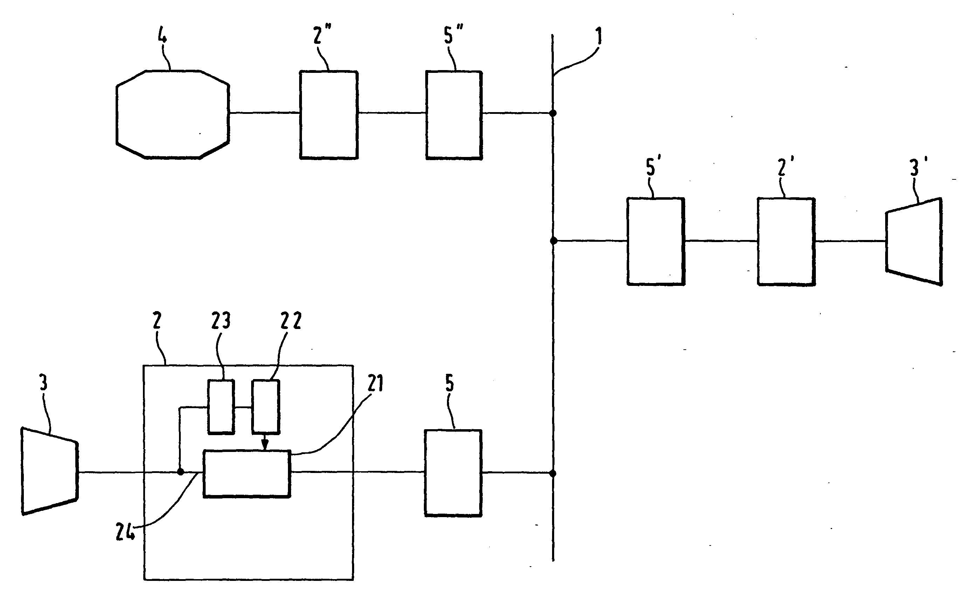

Gemäß Figur 2 dieser Vorveröffentlichung ist eine Variante beschrieben, bei der das Sende- und Empfangsteil den verwendeten Hochfrequenz-Träger aushandeln können und die Übertragung daraufhin nur noch mit einem der beiden Träger weitergeführt wird.

Der Erfindung liegt die Aufgabe zugrunde, eine Vorrichtung und ein Verfahren anzugeben, mit denen effizient eine schnelle Kommunikation über das Energieversorgungsnetz möglich ist.

Die Aufgabe wird bezüglich der Vorrichtung entsprechend den im Anspruch 1 und bezüglich des Verfahrens entsprechend den im Anspruch 2 angegebenen Merkmalen gelöst. Bevorzugte Ausführungsformen des Verfahrens sind in den Unteransprüchen angegeben.

Im Gegensatz zum gattungsbildenden Stand der Technik ist erfindungsgemäß vorgesehen, dass der Signal-Rausch-Abstand der Übertragung festgestellt wird, und je nach dem, ob er sich verbessert oder verschlechtert, die Modulationsart so geändert wird, dass die Übertragungsgeschwindigkeit erhöht oder verringert wird.

Die erfindungsgemäße Vorrichtung stellt also durch den Empfang eines Befehlsignals eine Änderung der Verfügbarkeit der Ressourcen des Energieversorgungsnetzes fest. Das Auffinden eines Befehlsignals, beispielsweise vom Netzbetreiber, kann also eine Fernprogrammierung der Vorrichtung einleiten.

So kann beispielsweise die Modulationsart zwischen 8-fach-QAM und 64-fach-QAM umgeschaltet werden. Dies ermöglicht eine optimale Ausnutzung des verfügbaren Übertragungskanals auf dem Energieversorgungsnetz.

Im Rahmen der Erfindung ist also eine optimale Nutzung der Ressourcen des Energieversorgungsnetzes durch Umprogrammierung der für die Informationsübertragung verwendeten Vorrichtung entsprechend der Verfügbarkeit des Netzes möglich. Die Vorrichtung braucht daher nicht im ganzen ausgetauscht zu werden, wenn beispielsweise einzelne Frequenzbereiche nicht mehr zur Verfügung stehen, weil sie andere Dienste stören oder weil sie selbst gestört sind, oder wenn einzelne Frequenzbereiche verfügbar geworden sind, weil eine Störung beseitigt wurde oder sich andere Dienste nicht mehr gestört fühlen. In der Praxis wird in der Vorrichtung typischerweise eine Modulations- und/oder eine Demodulationseinrichtung umprogrammiert.

Vorteilhafterweise wird beim Umprogrammieren
- die Lage einer oder mehrerer Trägerfrequenzen neu festgelegt,
- die Modulationsart, beispielsweise das Modulationsverfahren, der Modulationsgrad oder Modulationsindex geändert,
- die Amplitude einzelner oder aller Trägersignale neu festgelegt,
- bei einer mikroprozessorgesteuerten Modulations- oder Demodulationseinrichtung ein Teil oder die gesamte Software für den Mikroprozessor ausgetauscht,
- der Frequenzgang digitaler Filter in der Modulations- oder Demodulationseinrichtung neu festgelegt,
- die Datenübertragungsgeschwindigkeit neu festgelegt, die Datenübertragungsrichtung für einzelne oder alle Trägersignale neu festgelegt,
- Funktionen der Modulations- oder Demodulationseinrichtung, die einen Einfluss auf die Nutzung von Ressourcen des Energieversorgungsnetzes als Übertragungsmedium haben, geändert,
- Berechtigungen zur Kommunikation mit bestimmten Gegenstellen, die beispielsweise aufgrund der örtlichen Lage oder verwendeten Trägerfrequenzen zu Störungen Dritter fuhren, neu festgelegt, und/oder
- die Modulations- oder Demodulationseinrichtung für bestimmte Zeiten oder insgesamt gesperrt oder entsperrt.

Die Feststellung der Verfügbarkeit des Energieversorgungsnetzes beruht vorteilhafterweise auf einer Messung der Eigenschaften eines oder mehrerer seiner Übertragungskanäle. Um in Reaktion auf eine Störung das Umprogrammieren noch sicher durchführen zu können, werden das Messen und Umprogrammieren vorteilhafterweise mit einer störunempfindlichen, robusten Modulationsart durchgeführt.

Die Ausgestaltung nach Anspruch 4 hat den Vorteil, dass die Umprogrammierung ökonomisch ohne Trennung der Vorrichtung vom Energieversorgungsnetz, insbesondere ohne Einschicken zum Hersteller oder Kundendienst erfolgen kann.

Bevorzugte Ausführungsbeispiele der Erfindung werden im Folgenden anhand der Zeichnung erläutert. Darin zeigt die einzige Figur schematisch die Beschaltung eines Energieversorgungsnetzes bei Verwendung zur Datenübertragung.

In der Figur sind mehrere Endgeräte 3, 3' sowie ein Netzbetreiber 4 (Server) an ein Energieversorgungsnetz 1 gekoppelt. Die Kopplung erfolgt jeweils über ein Modem 2, 2', 2'' und ein Interface 5, 5', 5''.

Das Energieversorgungsnetz 1 beinhaltet das Niederspannungsnetz im oder außer Haus oder das Mittelspannungsnetz. Das Energieversorgungsnetz 1 wird zur Übertragung von Daten in Form modulierter Signale zwischen den Endgeräten 3, 3' und dem Betreiber 4 verwendet. Dabei dient das Interface 5, 5', 5'' jeweils der Trennung des Modems 2, 2', 2'' vom Energieversorgungsnetz 1, so dass die Energieversorgungsspannungen auf dem Netz 1 weitestgehend vom Modem 2, 2', 2'' ferngehalten werden, während die der Datenübertragung dienenden modulierten Signale durchgelassen werden.

Das Modem 2, 2', 2'' enthält jeweils eine Modulations- und Demodulationsschaltung 21 zur Umsetzung zwischen einerseits den digitalen Daten von und zum jeweiligen Endgerät 3, 3' beziehungsweise Betreiber 4 und andererseits den modulierten Signalen von und zum Energieversorgungsnetz 1 über das jeweilige Interface 5, 5', 5''. Die modulierten Signale liegen in einem oder mehreren Frequenzbändern im Bereich von 0,15 bis 30 MHz. In jedem Frequenzband befinden sich die Frequenzen eines oder mehrerer Trägersignale (Trägerfrequenzen), die in der Modulations- und Demodulationsschaltung 21 mit den digitalen Daten moduliert werden. Bei der dabei verwendeten Modulationsart handelt es sich um DMT-OFDM (discrete multitone-orthogonal frequency division multiplex) oder alternativ um Mehrträger-CDMA (multi-carrier code division multiple access).

Das Modem 2, 2', 2'' ist jeweils so eingerichtet, dass die genutzten Frequenzbereiche jederzeit und beliebig oft geändert werden können. Damit ist eine Anpassung an geänderte Frequenzzuteilungen einfach möglich. Zu diesem Zweck enthält es einen als EEPROM realisierten wiederbeschreibbaren Speicher 22 und eine Steuereinheit 23 in Form eines Mikroprozessors. Die hier beschriebenen Funktionen des Modems 2, 2', 2'' können auch mit einem DSP (digital signal processor) oder mit einem ASIC (application specific integrated circuit) realisiert werden. Der Speicher 22 enthält Software-Daten, die die von der Modulations- und Demodulationsschaltung 21 verwendeten Trägerfrequenzen festlegen. Die Steuereinheit 23 ist sowohl mit dem Speicher 22 als auch mit einem Eingangs/Ausgangsanschluss 24 für die digitalen Daten der Modulations- und Demodulationsschaltung 21 verbunden. Damit kann die Steuereinheit 23 ein in den digitalen Daten enthaltenes Befehlssignal empfangen, das das Modem in einen Programmiermodus versetzt, in dem es die Steuereinheit 23 anweist, die im Speicher 22 abgelegte Festlegung der Trägerfrequenzen zu ändern, so dass anschließend bestimmte Trägerfrequenzen nicht weiter oder andere Trägerfrequenzen neu verwendet werden. Mit Hilfe des Befehlssignals lässt sich das Modem 2 also vom zugehörigen Endgerät 3 oder vom Betreiber 4 aus fernprogrammieren. Das Modem 2 lässt sich damit in situ umprogrammieren, ohne zum Hersteller oder Kundendienst eingeschickt werden zu müssen.

Der Empfang des Befehlssignals bedeutet für das Modem 2, 2', 2'' also die Feststellung, dass sich die Verfügbarkeit des Energieversorgungsnetzes 1 für die bisher verwendeten modulierten Signale mit ihren einzelnen Eigenschaften wie Trägerfrequenzen, Modulationsarten oder Signalamplituden geändert hat.

Die Steuereinheit 23 spricht auf das Befehlssignal nur an, wenn dieses eine das jeweilige Modem 2, 2', 2'' individuell kennzeichnende, eindeutige Adresse enthält. So kann jedes Modem einzeln oder es können mehrere Modems gemeinsam, gruppenweise umprogrammiert werden. Vorzugsweise ist der Inhalt des Speichers 22 über die Steuereinheit 23 für den Betreiber 4 oder das zugehörige Endgerät 3 auch auslesbar, so dass sein Inhalt geprüft und ein Umprogrammieren nur wenn nötig durchgeführt werden kann.

Das Befehlssignal kann vom Betreiber 4 ohne oder mit vorheriger Einholung der Zustimmung des Nutzers des zugehörigen Endgeräts 3 gebildet werden. Ohne Zustimmung des Nutzers kann dies zum Beispiel bei jedem Zugriff des Nutzers auf ein vom Betreiber 4 zur Verfügung gestelltes System, beispielsweise eine vom Betreiber 4 zur Verfügung gestellte Internet-Ankopplung erfolgen.

In Abwandlungen des zuvor beschriebenen Ausführungsbeispiels kann die Umprogrammierung des Modems 2, 2', 2'' anstatt über das Energieversorgungsnetz 1 auch über eine analoge Telefonleitung, einen ISDN-Anschluss, über einen Anschluss an ein Kabelfernseh-Netz, über eine Funkverbindung (beispielsweise GSM, DECT, W-CDMA, CDMA, Bluetooth), über einen Infrarotanschluss, eine Computer-Schnittstelle (beispielsweise eine serielle oder parallele Schnittstelle, einen USB- oder PCMCIA-Anschluss), über ein digitales Dateneinspeisegerät (beispielsweise ein CD-, DVD- oder Disketten-Laufwerk), durch Austausch des digitalen Speichers 22, der dann beispielsweise als EPROM realisiert ist, oder über einen sonstigen digitalen Bus erfolgen.

Im folgenden wird die Betriebsweise des Modems in verschiedenen Anwendungsbeispielen erläutert:

Handelt es sich bei dem Betreiber 4 um einen Internet-Service-Provider, so kann er beispielsweise bei jedem Internet-Zugriff des Endgeräts 3 erkennen, dass der Zugriff vom Modem 2 über das Energieversorgungsnetz 1 und das eigene Modem 2'' erfolgt. Dann wird mittels Befehlssignalen an die Steuereinheit 23 die Version der Software im Speicher 22 abgefragt und gegebenenfalls automatisch oder mit Zustimmung des Nutzers am Endgerät 3 aktualisiert.

In einem anderen Beispiel versendet der Betreiber 4 bei geänderter Verfügbarkeit der Ressourcen des Energieversorgungsnetzes 1 für Datenübertragungen eine aktualisierte Software beispielsweise auf 3 1/2''-Diskette an seine Kunden. Das Endgerät 3 stellt einen PC dar, den der Nutzer an das Modem 2 anschließt. Mit der Diskette und dem PC führt der Nutzer die Umprogrammierung des Modems 2 durch.

In einem weiteren Beispiel ändert der Nutzer seine Vertragsbedingungen mit dem Betreiber 4. Daraufhin wird sein Modem 2 beispielsweise auf eine höhere Datenübertragungsgeschwindigkeit, auf erweiterte Zugriffsrechte für Datenübertragungsdienste, auf eine größere Zahl über das Energieversorgungsnetz als Übertragungsmedium anwählbarer und empfangbarer Fernsehkanäle oder auf eine geänderte Auswahl abrufbarer Dienste wie Spiele, Spielfilme etc. umprogrammiert.

In einem weiteren Anwendungsbeispiel wird in der Region der Endgeräte 3, 3' ein neuer Flughafen gebaut, für dessen ungestörten Betrieb die Modems 2, 2' der Region ferngesteuert umprogrammiert werden, um einzelne bisher genutzte Frequenzbereiche freizugeben, also nicht mehr von den Modems 2, 2' zu nutzen, andere Frequenzbereiche dagegen neu zugeteilt zu bekommen.

In einem anderen Anwendungsbeispiel wird das Signal/ Rausch-Verhältnis für die Informationsübertragung auf dem Niederspannungsnetz durch gezielte Maßnahmen wie Abschirmen und Filtern von Störungen durch einzelne Verbraucher am Netz verbessert, woraufhin alle Modems 2, 2' 2'' des Netzes per Fernsteuerung auf eine schnellere Modulationsart, beispielsweise von achtfach-QAM auf vierundsechzigfach-QAM umgestellt werden.

In einem Ausführungsbeispiel, schließlich, bestimmt die Steuereinheit 23 des Modems 2 anhand der Fehlerrate in der Übertragung von Daten über das Energieversorgungsnetz 1 oder durch Messen anderer Eigenschaften der Leitungen des Energieversorgungsnetzes die Übertragungsqualität und speichert Informationen darüber im Speicher 22 ab. Beispielsweise werden Eigenschaften wie Dämpfungen des Netzes oder Linien im Frequenzspektrum von Störsignalen gemessen und in einem Störungsprotokoll gespeichert. Vom Betreiber 4 wird die gespeicherte Information von Zeit zu Zeit ausgelesen und dazu verwendet, das Modem 2 so umzuprogrammieren, dass die Übertragungsqualität verbessert wird. Dies geschieht durch Senden des Befehlssignals an das Modem beispielsweise zum Deaktivieren von Frequenzbereichen, in denen Störer auftreten und zum Aktivieren neuer Frequenzbereiche, in denen wenig Störungen auftreten. Die Steuereinheit 23 des Modems 2 stellt dann also erst aufgrund eines Befehlssignals vom Betreiber 4 fest, dass die Umprogrammierung notwendig ist. Vorzugsweise jedoch stellt die Steuereinheit 23 selbst fest, dass Übertragungsfehler zunehmen oder gar Störungen überhand nehmen, und leitet die Umprogrammierung aufgrund des Störungsprotokolls selbst ein. Dazu kann die Steuereinheit 23 das Umprogrammieren eigenständig vornehmen oder vom Betreiber 4 das zuvor beschriebene Befehlssignal verlangen, um die Umprogrammierung nach dessen Anweisung durchzuführen.

## Patentansprüche

1. Vorrichtung zur Übertragung von Informationen über das Energieversorgungsnetz (1), aufweisend:
eine Einrichtung (22) zur Festlegung eines Trägersignals und einer Modulationsart,
eine Einrichtung (21) zur Modulation des festgelegten Trägersignals mit den zu übertragenden Informationen gemäß der festgelegten Modulationsart und zum Aussenden des modulierten Trägersignals über das Energieversorgungsnetz (1) und
eine Steuereinrichtung (23) zum Bestimmen von Eigenschaften des Energieversorgungsnetzes (1), die die Qualität der Übertragung der Informationen mit dem festgelegten Trägersignal und der festgelegten Modulationsart betreffen, und zum Umprogrammieren der Vorrichtung, wenn anhand der bestimmten Eigenschaften festgestellt wird, daß sich die Verfügbarkeit des Energieversorgungsnetzes für die Übertragung der Informationen ändert,
**dadurch gekennzeichnet, daß** die Steuereinrichtung (23) eingerichtet ist, ein Protokoll über die von ihr bestimmten Eigenschaften des Energieversorgungsnetzes abzuspeichern, das Auslesen des abgespeicherten Protokolls durch einen externen Server (4) zu erlauben, vom Server (4) ein Befehlssignal zu empfangen, dessen Empfang signalisiert, daß sich die Verfügbarkeit des Energieversorgungsnetzes für das verwendete, zuvor festgelegte modulierte Trägersignal geändert hat, und das Umprogrammieren auf Anweisung des Befehlssignals vorzunehmen, indem sie die Einrichtung (22) zur Festlegung eines Trägersignals und einer Modulationsart veranlaßt, ein anderes Trägersignal und/oder eine andere Modulationsart für die weitere Übertragung der Informationen festzulegen.

2. Verfahren zur Übertragung von Informationen über das Energieversorgungsnetz (1) mittels einer mit einem Server (4) verbundenen programmierbaren Übertragungsvorrichtung (2) nach Anspruch 1, mit folgenden Schritten:
Festlegen eines Trägersignals und einer Modulationsart,
Modulieren des festgelegten Trägersignals mit den zu übertragenden Informationen gemäß der festgelegten Modulationsart,
Übertragen des modulierten Signals über das Energieversorgungsnetz (1),
Bestimmen von Eigenschaften des Energieversorgungsnetzes (1), die die Qualität der Übertragung der Informationen mit dem festgelegten Trägersignal und der festgelegten Modulationsart betreffen,
Speichern eines Protokolls über die bestimmten Eigenschaften,
Auslesen des gespeicherten Protokolls durch den Server (4),
Empfang eines Befehlssignals vom Server (4) her, das signalisiert, daß sich die Verfügbarkeit des Energieversorgungsnetzes für das verwendete, zuvor festgelegte modulierte Trägersignal geändert hat, und eine Anweisung zur Umprogrammierung der Übertragungsvorrichtung (2) aufweist,
Umprogrammieren der Übertragungsvorrichtung (2) entsprechend der Anweisung des Befehlssignals, so daß für die weitere Übertragung der Informationen ein anderes Trägersignal und/oder eine andere Modulationsart festgelegt wird, und
Fortsetzen der Modulations- und Übertragungsschritte mit der umprogrammierten Übertragungsvorrichtung (2).

3. Verfahren nach Anspruch 2, wobei das Umprogrammieren ein Neufestlegen der Frequenz und/oder Amplitude des Trägersignals beinhaltet.

4. Verfahren nach Anspruch 2 oder 3, wobei das Umprogrammieren der Vorrichtung (2) in situ vorgenommen wird.

5. Verfahren nach einem der Ansprüche 2 bis 4, wobei der Festlegungsschritt das Festlegen mehrerer Trägerfrequenzen und der Umprogrammierungsschritt die Entfernung oder Hinzufügung mindestens einer Trägerfrequenz beinhaltet.

6. Verfahren nach einem der Ansprüche 2 bis 5, wobei das Umprogrammieren eine Änderung der Modulationsart unter Verringerung der Informationsübertragungsgeschwindigkeit, wenn zuvor eine Verringerung des Signal-Rausch-Abstands festgestellt wurde, und unter Vergrößerung der Informationsübertragungsgeschwindigkeit, wenn zuvor eine Vergrößerung des Signal-Rausch-Abstands festgestellt wurde, beinhaltet.

7. Verfahren nach einem der Ansprüche 2 bis 6, wobei der Umprogrammierschritt das Neufestlegen eines Trägersignals und/oder einer Modulationsart beinhaltet, so daß die Neufestlegung ein Trägersignal und/oder eine Modulationsart neu enthält, für die das Energieversorgungsnetz verfügbar geworden ist, oder ein bisher festgelegtes Trägersignal und/oder eine bisher festgelegte Modulationsart nicht mehr enthält, für die das Energieversorgungsnetz nicht mehr verfügbar ist.

## Claims

1. Device for transmitting information over the powerline network (1), comprising:
a device (22) for determining a carrier signal and a form of modulation,
a device (21) for modulating the determined carrier signal with the information to be transmitted in accordance with the determined form of modulation and for transmitting the modulated carrier signal over the powerline network (1) and
a controller (23) for defining characteristics of the powerline network (1), which concern the quality of transmission of the information with the determined carrier signal and the determined form of modulation, and for reprogramming the device, if it is established on the basis of the defined characteristics, that the availability of the powerline network for transmitting the information has changed,
**characterized in that** the controller (23) is adapted to store a protocol about the characteristics of the powerline network, defined by said controller, to permit the stored protocol to be read by an external server (4), to receive a command signal from the server (4), the receipt of which indicates that the availability of the powerline network for the pre-determined modulated carrier signal used has changed, and to carry out the reprogramming as instructed by the command signal, by inducing the device (22), for determining a carrier signal and a form of modulation, to define a different carrier signal and/or a different form of modulation for further transmission of the information.

2. Method for transmitting information over the powerline network (1) by means of a programmable transmitting device (2) connected to a server (4) according to Claim 1, with the following steps:
determining a carrier signal and a form of modulation,
modulating the determined carrier signal with the information to be transmitted, in accordance with the determined form of modulation,
transmitting the modulated signal over the powerline network (1),
defining characteristics of the powerline network (1), which concern the quality of transmission of the information, with the determined carrier signal and the determined form of modulation,
storing a protocol about the defined characteristics, reading the stored protocol by the server (4),
receiving a command signal from the server (4) which indicates that the availability of the powerline network for the pre-determined modulated carrier signal used has changed and comprises an instruction for reprogramming the transmitting device (2),
reprogramming the transmitting device (2) according to the instruction of the command signal, so that a different carrier signal and/or a different form of modulation are defined for further transmission of the information, and
continuing the modulation and transmission steps with the reprogrammed transmitting device (2).

3. Method according to Claim 2, wherein reprogramming includes newly determining the frequency and/or amplitude of the carrier signal.

4. Method according to Claim 2 or 3, wherein reprogramming of the device (2) takes place in situ.

5. Method according to any one of Claims 2 - 4, wherein the determining step includes determining several carrier frequencies and the reprogramming step includes removing or adding at least one carrier frequency.

6. Method according to any one of Claims 2 - 5, wherein reprogramming includes changing the form of modulation while reducing the information transfer speed, if a decrease in the signal to noise ratio has been determined beforehand, and while increasing the information transfer speed, if an increase in the signal to noise ratio has been determined beforehand.

7. Method according to any one of Claims 2 - 6, wherein the reprogramming step includes newly determining a carrier signal and/or a form of modulation so that the new determination newly contains a carrier signal and/or a form of modulation for which the powerline network has become available or no longer contains a pre-determined carrier signal and/or a pre-determined form of modulation for which the powerline network is no longer available.

## Revendications

1. Dispositif pour la transmission d'informations via le réseau d'alimentation électrique (1), comprenant :
des moyens (22) pour fixer un signal porteur et un type de modulation,
des moyens (21) pour la modulation du signal porteur fixé avec les informations à transmettre selon le type de modulation fixé, et pour envoyer le signal porteur modulé via le réseau d'alimentation électrique (1), et
des moyens de commande (23) pour déterminer des propriétés du réseau d'alimentation électrique (1), qui concernent la qualité de la transmission des informations avec le signal porteur fixé et le type de modulation fixé, et pour modifier la programmation du dispositif si, à l'aide des propriétés déterminées il est constaté que la disponibilité du réseau d'alimentation électrique pour la transmission des informations se modifie,
**caractérisé en ce que** les moyens de commande (23) sont conçus pour mémoriser un protocole concernant les propriétés du réseau d'alimentation électrique déterminées par eux-mêmes, pour permettre la lecture du protocole mémorisé par un serveur externe (4), pour recevoir un signal d'ordre de la part du serveur (4), dont la réception signalise que la disponibilité du réseau d'alimentation électrique pour le signal porteur modulé utilisé auparavant fixé s'est modifiée, et pour procéder à la modification de programmation sur instruction du signal d'ordre **en ce qu'**ils amènent les moyens (22) pour fixer un signal porteur et un type de modulation à fixer un autre signal porteur et/ou un autre type de modulation pour la poursuite de la transmission des informations.

2. Procédé pour la transmission d'informations via le réseau d'alimentation électrique (1) au moyen d'un dispositif de transmission programmable (2) selon la revendication 1, relié à un serveur (4), comprenant les étapes suivantes :
fixation d'un signal porteur et d'un type de modulation,
modulation du signal porteur fixé avec les informations à transmettre selon le type de modulation fixé,
transmission du signal modulé via le réseau d'alimentation électrique (1),
détermination de propriétés du réseau d'alimentation électrique (1) qui concernent la qualité de la transmission des informations avec le signal porteur fixé et le type de modulation fixé,
mémorisation d'un protocole sur les propriétés déterminées,
lecture du protocole mémorisé par le serveur (4),
réception d'un signal d'ordre de la part du serveur (4), qui signalise que la disponibilité du réseau d'alimentation électrique pour le signal porteur modulé utilisé préalablement fixé s'est modifiée, et d'une instruction pour la modification de programmation du dispositif de transmission (2),
modification de la programmation du dispositif de transmission (2) en correspondance de l'instruction du signal d'ordre, de sorte que pour la poursuite de la transmission des informations on fixe un autre signal porteur et/ou un autre type de modulation, et
poursuite des opérations de modulation et de transmission avec le dispositif de transmission (2) dont la programmation a été modifiée.

3. Procédé selon la revendication 2, dans lequel la modification de programmation inclut une nouvelle fixation de la fréquence et/ou de l'amplitude du signal porteur.

4. Procédé selon la revendication 2 ou 3, dans lequel la modification de programmation du dispositif (2) est exécutée in situ.

5. Procédé selon l'une des revendications 2 à 4, dans lequel l'opération de fixation inclut la fixation de plusieurs fréquences porteuses, et l'opération de modification de programmation inclut la suppression ou l'addition d'au moins une fréquence porteuse.

6. Procédé selon l'une des revendications 2 à 5, dans lequel la modification de programmation inclut une modification du type de modulation avec réduction de la vitesse de transmission d'informations si l'on a constaté auparavant une réduction de l'écart signal/bruit et avec augmentation de la vitesse de transmission d'informations si l'on a constaté auparavant une augmentation de l'écart signal/bruit.

7. Procédé selon l'une des revendications 2 à 6, dans lequel l'opération de modification de programmation inclut la nouvelle fixation d'un signal porteur et/ou d'un type de modulation, de sorte que la nouvelle fixation contient un signal porteur et/ou un type de modulation nouveau pour lesquels le réseau d'alimentation électrique est devenu disponible, ou bien ne contient plus un signal porteur fixé jusqu'ici ou/ou un type de modulation fixé jusqu'ici, pour lesquels le réseau d'alimentation électrique n'est plus disponible.
